# EUROPEAN PATENT SPECIFICATION

(11) **EP 2 880 206 B1**
(45) Date of publication and mention of the grant of the patent: **27.02.2019**
(21) Application number: 13825529.4
(22) Date of filing: 29.07.2013
(51) Int. Cl.: A01N 25/08, A01N 59/16, A01N 59/20, A01N 65/03

(54) **PERSONAL CARE PRODUCTS COMPRISING ALGAL BIOMASS FIBERS LADEN WITH METAL IONS**
KÖRPERPFLEGEERZEUGNIS ENTHALTEND MIT METALLIONEN BELADENE FASERN AUS ALGENBIOMASSE
PRODUITS DE SOINS PERSONNELS COMPRENANT DES FIBRES DE BIOMASSE ALGALE CONTENUES D'IONS METALLIQUES

(30) Priority: 30.07.2012 US 201213561999
(43) Date of publication of application: 10.06.2015
(73) Proprietor: Kimberly-Clark Worldwide, Inc., Neenah, Wisconsin 54956 (US)
(72) Inventor: SHI, Bo, Neenah, Wisconsin 54956 (US)
(74) Representative: Dehns
(86) International application number: PCT/IB2013/056217
(87) International publication number: WO 2014/020520

(56) References cited:
- WO-A1-03/018166
- WO-A1-2011/029178
- DE-U1-202011 000 227
- US-A- 1 792 939
- US-A- 5 055 402
- US-A- 5 496 860
- US-A- 5 779 960
- "New lyocell fiber with copper", CHEMICAL FIBERS INTERNATIONAL, IBP PRESS, FRANKFURT AM MAIN, DE, vol. 59, no. 3, 3 September 2009 (2009-09-03), page 132, XP001547716, ISSN: 0340-3343
- ZIKELI S: "LYOCELL FIBERS WITH HEALTH-PROMOTING EFFECT THROUGH INCORPORATION OF SEAWEED", CHEMICAL FIBERS INTERNATIONAL, IBP PRESS, FRANKFURT AM MAIN, DE, vol. 51, no. 4, 1 September 2001 (2001-09-01), pages 272,274-276, XP001096778, ISSN: 0340-3343
- UTA-CHRISTINA HIPLER ET AL: "Antifungal and antibacterial properties of a silver-loaded cellulosic fiber", JOURNAL OF BIOMEDICAL MATERIALS RESEARCH. PART B: APPLIED BIOMATERIALS, vol. 77B, no. 1, 1 January 2006 (2006-01-01), pages 156-163, XP55248699, US ISSN: 1552-4973, DOI: 10.1002/jbm.b.30413
- "XXXII. Annual Meeting of the ADF", ARCHIVES OF DERMATOLOGICAL RESEARCH ; FOUNDED IN 1869 AS ARCHIV FÜR DERMATOLOGIE UND SYPHILIS, SPRINGER, BERLIN, DE, vol. 296, no. 9, 1 March 2005 (2005-03-01) , pages 383-463, XP019341127, ISSN: 1432-069X, DOI: 10.1007/S00403-005-0543-2
- U C Hipler: "Textilien mit antimykotischen und antibakteriellen Eigenschaften", Mycoses, 30 July 2008 (2008-07-30), pages 39-43, XP55248696, Retrieved from the Internet: URL:http://onlinelibrary.wiley.com/store/1 0.1111/j.1439-0507.2008.01586.x/asset/j.14 39-0507.2008.01586.x.pdf?v=1&t=ikfbegp6&s= eef19610e38c5eb5a0474396038f80b3b59e85ca [retrieved on 2016-02-09]
- Zikeli, S.: "Production Process of a New Cellulosic Fiber with Antimicrobial Properties" In: Hipler, U.-C., Elsener, O.: "Biofunctional Textiles and the Skin (Curr. Probl. Dermatol.)", 1 January 2006 (2006-01-01), Karger, Basel, CH, XP009188465, ISBN: 9783805581219 vol. 33, pages 110-126, * page 114, line 1 - line 13 * * page 115, line 13 - line 22 * * page 116, line 12 - page 117, line 3 * * page 119, line 8 - page 120, line 3 * * page 122, line 3 - line 15 * * figures 1, 2, 4, 6 * * table 3 *
- MUSTAFA E. ÜREYEN: "Spinning performance and antibacterial activity of SeaCell active/cotton blended rotor yarns", FIBERS AND POLYMERS, vol. 10, no. 6, 1 December 2009 (2009-12-01), pages 768-775, XP55248694, KR ISSN: 1229-9197, DOI: 10.1007/s12221-009-0768-3
- "Finishing of fabrics containing SeaCell Active", , 17 August 2005 (2005-08-17), pages 1-4, XP55248682, Wevelgem, Belgium Retrieved from the Internet: URL:http://www.chemotex.com/artikels/Finis hing of fabrics containing SeaCell active.pdf [retrieved on 2016-02-09]
- Smartfiber: "Cellulosefasern SeaCell mit gesundheitsförderndem Algenzusatz", melliand Textilberichte / Textile Technology, 1 March 2011 (2011-03-01), pages 1-4, XP55248691, Retrieved from the Internet: URL:http://www.smartfiber.de/medienspiegel /Cellulosefasern SeaCell-1.pdf [retrieved on 2016-02-09]
- CHANGJUN ZHU ET AL: "Effect of carboxymethylation on the properties of SeaCell active fibers", CHEMICAL FIBERS INTERNATIONAL, IBP PRESS, FRANKFURT AM MAIN, DE, vol. 59, no. 2, 1 May 2009 (2009-05-01), pages 108-110, XP001522070, ISSN: 0340-3343
- DATABASE WPI Week 200875 Thomson Scientific, London, GB; AN 2008-M64988 XP002754095, -& CN 101 096 776 A (SHANDONG HAILONG CO LTD) 2 January 2008 (2008-01-02)
- DATABASE WPI Week 200940 Thomson Scientific, London, GB; AN 2009-J84882 XP002754096, -& CN 101 433 443 A (QINGDAO XIYINGMEN GROUP CO LTD) 20 May 2009 (2009-05-20)
- FLUHR ET AL.: 'Silver-loaded seaweed-based cellulosic fiber improves epidermal skin physiology in atopic dermatitis: safety assessment, mode of action and controlled, randomized single-blinded exploratory in vivo study' EXPERIMENTAL DERMATOLOGY vol. 19, 2009, pages E9 - E15, XP055189157
- BISHNOI ET AL.: 'Biosorption of copper from aqueous solution using algal biomass' JOURNAL OF SCIENTIFIC & INDUSTRIAL RESEARCH vol. 63, 2004, pages 813 - 816, XP055189159

## Description

### FIELD OF THE INVENTION

The present invention relates to personal care products comprising algal biomass fibers laden with metal ions that provide benefits to the environment, the consumer care industry and consumers.

### BACKGROUND OF THE INVENTION

Tree-based cellulose, a well described polymer of β(1-4)-D-glucose, is the fiber of choice for manufacturing most personal care products such as facial tissue, kitchen towel, bathroom tissue, pantiliner, incontinence pad, and diaper. Aquatic species are not well-known for their cellulose content, however, some species such as *Cladophora*, *Chaetomorpha*, and *Rhizoclonium* contain significant amounts of cellulose important to sustainable personal care product manufacturing. Blue-green *Cladophora* algae are different from other types of macroalgae because they grow naturally in ponds, rivers, lakes and near-shore shallow waters. Their physical form is filamentous and they contain up to about 45% cellulose.

*Cladophora* algal fiber is also known for its ability to effectively adsorb metal ions from contaminated aqueous streams. This is due to the presence of a high affinity of metal ions towards the carboxylate, amine, and phosphate functional groups that are available for metal complexation. *Cladophora* algal fiber is a rapidly renewable resource due to its short harvest cycle and high yield. Such use, however, has been limited to heavy metal removals from wastewater and other industrial treatment processes. The spent *Cladophora* containing metals are normally discarded in landfill or incinerated. As it is commonly known, there is no further utility of the spent *Cladophora* containing metals. Thus, the use of *Cladophora* containing metals for odor removal or antimicrobial functionality in consumer product applications is unfounded. The use of this particular biomass, functionalized via metal adsorption, for personal care products is attractive not only for its abundant availability, simple processing and low costs, but also for its ability to contribute positively to the environment via effective CO₂ fixation during the growth phase of algal biomass.

The elimination of detectable, unpleasant odors is a priority need for urinary incontinence and personal hygiene products. Superabsorbents, activated carbon and other odor control additives such as calcium carbonate, talc powder, cyclodextrin, ethylenediamine tetra-acetic acid, activated silica and other products and chemicals have been utilized to improve odor control or reduce or mask odors within personal care products. Most of these approaches reduce or inhibit the development of undesirable smells and/or bacteria that produce odor.

Activated carbon, known in the industry as the "gold standard" in odor absorbency, is able to absorb a wide range of odorants such as trimethylamine, triethylamine, dimethyl disulfide, isocaleric acid and pyridine. However, it is not effective in absorbing ammonia, a malodor generated by the biological breakdown of urea. Although activated carbon fiber has a much larger surface area and faster kinetics than those provided by activated carbons, it is still inefficient for ammonia removal. This is a significant issue with baby care and incontinence products. Additionally, the use of activated carbon in personal care products has been limited due to its unappealing black color which could be construed as contamination (i.e., dirt in the absorbent).

Zeolite is another type of porous material potentially useful for ammonia removal, but certain factors such as pore size and accessibility of odor compounds make it ineffective. Therefore, the use of algal biomass fiber laden with metals for odor removal provides a unique option.

With respect to antimicrobial applications, many applications have been utilized to reduce, eliminate and prevent bacterial growth. Chemical compositions such as triclosan, quaternary ammonium, polymers such as polyvinylamine and poly(hexamethylene biguanide chloride), chitosan, and alcohols have been used for antimicrobial activity. The use of algal biomass laden with metals for antimicrobial activity, however, has yet to be explored.

Although there are benefits to the odor elimination products and antimicrobial applications currently available, there exists a need for an environmentally friendly personal care product that is derived from naturally supplied resources. By focusing on uses in the areas of odor removal and antimicrobial applications, the present invention provides an innovative way to introduce environmentally innovative products that benefit the consumer care industry and the personal care of consumers.

Hipler et al., Journal of Biomedical Materials Research, Part B: Applied Biomaterials, Vol. 77B, No. 1, pages 156-163 discloses the antifungal and antibacterial properties of a silver-loaded cellulosic fibre derived from finely ground seaweed.

Zikeli, in Biofunctional Textiles and the skin (Curr. Probl. Dermatol.), Karger, 2006, Vol. 33, pages 110-126 discloses a production process for a cellulosic fibre derived from seaweed, which fibre has antimicrobial properties.

WO03/018166 discloses a method for the adsorption of heavy metals from media containing heavy metals, using a Lyocell molded body. The resulting cellulosic molded body comprising adsorbed heavy metals has antibacterial and/or antifungal properties.

US1,792,939 discloses absorbents for gas filters comprising cuprous chloride on a solid carrier substrate such as activated carbon.

### SUMMARY OF THE INVENTION

The present invention relates to a personal care product comprising an algal biomass fiber material derived from *Cladophora*, *Chaetomorpha*, *Rhizoclonium*, or combinations thereof, and comprising at least one metal ion selected from the group consisting of copper, silver and combinations thereof, wherein said personal care product provides antimicrobial activity, odor removal, gas removal or a combination thereof.

A method for forming an antimicrobial or odor removal algal fiber is also disclosed that comprises cleaning of algal biomass fiber material, washing in dilute acid and base alternately, and loading ionic copper or silver by adsorption. Metal ions may constitute from about 0.1 wt.% to about 6 wt.% of the algal biomass fiber.

The present disclosure also relates to personal care products comprising substrates such as a nonwoven comprising a metal-laden algal biomass fiber present in an amount of from 1% to 30%, by weight of the substrate.

### BRIEF DESCRIPTION OF THE DRAWINGS

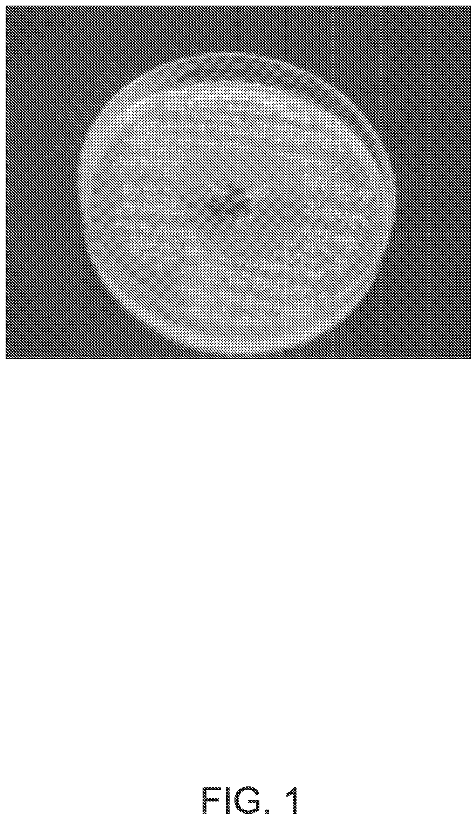

FIG. 1 shows a photo of antimicrobial activity of *Cladophora* laden with silver. The clear zone of 3.7 cm was measured when *S. aureus* (ATCC 25660) was evaluated by a zone of inhibition test.

### DETAILED DESCRIPTION OF THE INVENTION

While the specification concludes with the claims particularly pointing out and distinctly claiming the invention, it is believed that the present invention will be better understood from the following description.

All percentages, parts and ratios are based upon the total weight of the compositions of the present invention, unless otherwise specified. All such weights as they pertain to listed ingredients are based on the active level and, therefore; do not include solvents or byproducts that may be included in commercially available materials, unless otherwise specified. The term "weight percent" may be denoted as "wt. %" herein. Except where specific examples of actual measured values are presented, numerical values referred to herein should be considered to be qualified by the word "about".

As used herein, "comprising" means that other steps and other ingredients which do not affect the end result can be added. This term encompasses the terms "consisting of' and "consisting essentially of'. The compositions and methods/processes of the present invention can comprise, consist of, and consist essentially of the essential elements and limitations of the invention described herein, as well as any of the additional or optional ingredients, components, steps, or limitations described herein.

As used herein, the term "algal fibers or filamentous algal fibers" refers to any cellulosic fibrous material derived from *Cladophora*, *Chaetomorpha*, and *Rhizoclonium*. A fiber is defined as a slender, elongated, threadlike filament or structure created from natural or synthetic materials.

As used herein, the term for metal mass "concentration" refers to milligram per liter (mg/L), which is equivalent to ppm (parts per million). More common to chemistry in general is the use of molarity, the moles of solute per volume of solution in liters. Normally a symbol "M" is used as a unit for chemical concentration in aqueous solution referring to moles per liter. Mole is calculated by dividing sample weight by its molecular weight.

As used herein, "Nonwoven" is defined herein as a class of fabrics generally produced by attaching fibers together. Nonwoven fabric is made by mechanical, chemical, thermal, adhesive, or solvent means, or any combination of these. These can be wet-laid or dry-laid processes. Nonwoven manufacture is distinct from weaving, knitting, or tufting. Nonwoven fabrics may be made from synthetic thermoplastic polymers or natural polymers such as cellulose. Cellulosic tissue is one example of a nonwoven material.

As used herein, the term "wet-laid nonwoven forming apparatus" generally includes Fourdrinier former, twin wire former, cylinder machine, press former, crescent former, and the like known to those in skilled in the art.

As used herein, "BET nominal surface area" refers to a method developed by Brunauer, Emmett and Teller in 1931, which is a means of displaying the surface area of powders by measuring the amount of gas absorption under varying pressure conditions. The larger the BET gets, the smaller the primary particle and the larger the surface area of the powder. The BET value relays the square meters of surface area per gram of powder.

### Algal Biomass Fibers

There are two types of algae biomass, micro- and macro- species comprising several thousands of strains. Regardless of their diversity in nature, algal biomass fibers consists of carboxylate, amine, and phosphate groups, on their algal cell walls that are readily available for metal complexation as shown in the following adsorption reaction:

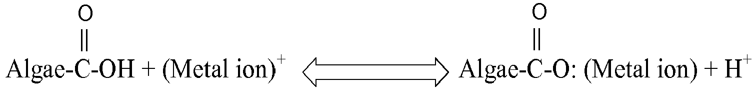

Not only is metal adsorption rapid within algal biomass fibers but it is also reversible and, thus the reaction may prefer to move towards the left of the equation particularly under acidic conditions. When the metal ion is subjected to the presence of a stronger ligand than that of the algal biomass, the metal ion will selectively react with the moiety that has the greatest binding capability. For example, lipid and protein materials in a bacteria cell wall contain sulfhydryl groups that compete against the carboxylate, amine and phosphate groups of the algal biomass for metal ions since the affinity of sulfhydryl groups is greater. Therefore, when there is antimicrobial activity, the metal desorption/transfer is essential and makes it a fundamental aspect of the present invention. Additionally, when compared to ordinary cellulose fiber that provides only a hydroxyl moiety, the adsorption capacity of metals onto algal fiber is far greater. Therefore, conventional pulp fibers cannot be effectively loaded with metals for either odor removal or antimicrobial activity. Adsorption capacity of the present invention may range from about 1 mg/g, from about 5 mg/g, from about 10 mg/g, from about 20 mg/g to about 75 mg/g, to about 60 mg/g, or to about 30 mg/g (metal per gram of algae biomass).

*Cladophora* biomass is a relatively inexpensive algal biomass fiber and is a rapidly renewable resource due to its fast growth and short harvest cycle of one to three months. Thus, it is desirable that the algal fiber is *Cladophora*. It can then be used within a personal hygiene or other consumer product for its functionality and environmentally friendly utility.

In the present invention, metal ions are loaded onto the algal biomass fiber by soaking the fibers in an aqueous solution with a metal concentration of from about 200 mg/L to about 1000 mg/L. In the laboratory, this can be accomplished in a container such as a beaker with a holding capacity of about 1000 mL to about 3000 mL. In an industrial-scale process, a pulper or holding tank can be used to achieve this purpose. The algal biomass fiber are preferably shredded (such as from about 2 mm to about 5 mm), cleaned (such as with an acid wash then a base wash and then rinsing with deionized water), and then soaked in the previously described metal ion aqueous solution. For example, the metal loading per gram of algal biomass fiber is about 20 mg under a neutral pH condition. The time to achieve this metal loading is about 30 minutes to about 60 minutes. The range of metals used within the present invention, however, is dependent on the metal adsorption capacity of the specific algal biomass fiber strains that are used. For example, *Cladophora* fibers from Egert Marsh ATS™ system in Florida may utilize an amount of metal ranging in an amount from about 0.1%, from about 3%, or from about 6%, by dry weight of algal fiber.

Metal ions used in the present invention are copper, silver and combinations thereof. With the use of algal biomass fibers laden with metal ions, the present invention addresses needs within the personal care industry for uses within products including to baby care products, health and wound care, incontinence articles, feminine care products.

Wet-laid nonwovens can be formed from algal biomass fiber laden with metal. A slurry can be made with clean, air-dried algae laden with metal as would be done in a typical tissue machine chest. This can be done at about a 2% consistency. The slurry can then be blended with softwood and hardwood pulp fibers in either a blended or layered mode. Pulp from the blended machine chest or the layered machine chests can be entered into the wet-end of a typical tissue machine to form a sheet which is dried and wound into soft roll sheets. The soft or hard rolls are then converted into a finished tissue product such as a facial, bath, towel, napkin.

Furthermore, a wet-laid nonwoven composite comprising algal biomass fiber laden with metals ranging in an amount from 1%, from 3% or from 5% to 30%, to 20%, or to 15%, by dry weight of the wet-laid nonwoven, can be produced using any conventional forming apparatuses and operations. US Patent Nos. 5,048,589; 5,399,412; 5,129,988 and 5,494,554 detailed conventional wet-laid nonwoven manufacturing processes. Particularly, within a papermaking preparation utilizing pulp manufacturing, the amount of algal biomass fiber laden with metal added to the blend tank should be sufficient to produce a substrate having a metal-laden fiber content of from 1%, from 3% or from 5% to 30%, to 20%, or to 15%, by dry weight of the substrate. The substrate may be a nonwoven.

The remaining conventional fibers in the wet-laid nonwoven composite can be selected from hardwood pulp or softwood pulp or a combination of both. They can be formed through a variety of pulping processes such as kraft pulp, sulfite pulp, thermomechanical pulp. Further, the wood fibers may be any high-average fiber length wood pulp, low-average fiber length wood pulp, or mixtures of the same. One example of suitable high-average length wood pulp fibers include softwood fibers such as northern softwood, southern softwood, redwood, red cedar, hemlock, pine (e.g., southern pines), spruce (e.g., black spruce), combinations thereof.

One example of suitable low-average length wood pulp fibers include hardwood fibers, such as eucalyptus, maple, birch, aspen. In certain instances, eucalyptus fibers may be particularly desired to increase the softness of the web. Eucalyptus fibers can also enhance the brightness, increase the opacity, and change the pore structure of the web to increase its wicking ability. Moreover, if desired, secondary fibers obtained from recycled materials may be used, such as fiber pulp from sources such as, for example, newsprint, reclaimed paperboard, and office waste.

Additionally, dry-laid nonwovens can be formed from the algal biomass fiber laden with metal by placing the clean, dried algal biomass fiber laden with metal into the front end of a nonwoven process. Nonwoven fabrics comprising algal biomass fiber laden with metal ions may be made according to dry-laid processes like spunbonding, meltblowing, airlaying, hydroentangling, coforming, bonded carded web processes, and so forth as described in US Patent 7,794,737. Metal-laden algal biomass fibers can then be placed into an airformer to make a blended fiber or layered fiber airlaid substrate; metal-laden algal biomass fiber can be blended with "staple fibers" to form bonded carded web; metal-laden algal biomass fibers can be blended with pulp fibers and sprayed into a meltblown stream of a coform unit to form coform; metal-laden algal biomass fibers can be blended with pulp fibers as they are laid down and hydroentangled on a spunbond substrate to form HYDROKNIT® nonwoven fabric; and metal-laden algal fibers can also be used in spunbond or meltblown substrates.

As mentioned, a bonded carded web is another means for incorporating algal biomass fiber laden with metals. The bonded carded web may be made from a mixture of algal biomass fiber and other staple fibers that are sent through a combing or carding unit, which, breaks apart and aligns fibers in the machine direction to form a generally machine direction-oriented fibrous nonwoven web. Once the web is formed, it then is bonded by one or more of several methods such as powder bonding, pattern bonding, through air bonding and ultrasonic bonding.

In another aspect of this invention, bundles of small fibers, including algal biomass fiber laden with metal ions, having typical lengths ranging from about 3 millimeters (mm) to about 52 mm are separated in the airlaying process and entrained in an air supply and then deposited onto a forming screen, usually with the assistance of a vacuum supply. The randomly deposited fibers are then bonded to one another. Examples of airlaid teachings include the DanWeb process as described in U.S. Patent 4,640,810 and the Kroyer process as described in U.S. Patent 4,494,278 and U.S. Patent 5,527,171, the method of U.S. Patent 4,375,448.

Handsheets can be made by taking the clean, air-dried algae laden with metal and mixing a non-metal laden Eucalyptus or other cellulose-based pulp within a handsheet former. Handsheets can be formed in ratios of from about 90/10, 80/20, 70/30 Eucalyptus to metal-laden algal biomass fibers.

Any of the dry-laid or wet-laid substrates utilizing the metal-laden algal biomass fiber can be cut to a desired size or shape to form various products such as tissue, towel, napkin, disinfecting wipes, sanitizing wipes. They can also be used for personal care products or articles such as diaper, training pant, feminine pad, adult care garments, health care garments.

### Antimicrobial Applications

During the use of the consumer product containing metal-laden algal biomass fiber, metal ions will transfer from the metal-laden algal biomass fiber to the bacteria due to a high affinity of sulfhydryl groups on bacterial cells. The evidence of metal transfer from one ligand to another can be obtained by comparing metal binding constants or observing bactericidal results from a zone of inhibition test such as that shown in FIG. 1 and detailed below. Metal ions forming complexes with sulfhydryl groups on bacterial cells result in bacterial protein denaturation or DNA damage. Thus, a consumer product incorporating such algal biomass fiber laden with a metal ion would be beneficial for antimicrobial applications.

In some cases, metal-laden algal biomass fiber with metals such as copper or silver can exhibit antimicrobial activity and odor removal functionalities simultaneously. For example, antimicrobial activity of the present invention includes, but is not limited to eliminating Gram positive bacteria *Staphylococcus aureus* (ATCC 25660) and Gram negative bacteria *Escherichia coli* (ATCC 25922), and combinations thereof. This feature is desirable for some of personal care products such as diapers and adult incontinence absorbent pads and garments, where odor removal and germ protection are unmet needs of consumers.

### Zone of Inhibition Test

To test the antimicrobial activity of metal-laden algal biomass fibers, a "Zone of Inhibition" test is utilized. Metal-laden algal biomass fiber samples (3 g), such as *Cladophora*, are weighed and soaked in 10 ml of deionized water overnight. TSA (trypticase soy agar) plates are prepared with 1 cm round hole in the middle and inoculated 10⁵ CFU/ml of *S. aureus* (ATCC 25660) as a Gram positive bacteria or *E. coli* (ATCC 25992) as Gram negative bacteria.

A small piece of wetted fiber about 0.1 gram can be cut and placed on the 1cm round hole. After 24 hours incubation at 37 °C, plates are measured for clear zones of inhibition surrounding each sample (Clear zone in mm = diameter of clear zone - sample (metal-laden algal biomass fiber) diameter), including photos taken. The clear zone is created by the antimicrobial activity from the sample.

### Odor Removal

Although, activated carbon, zeolite and even charcoal, are well accepted in several regions for odor control, there continues to be a need for a material that does not have as many limits in their use for hygiene products for effectively reducing or eliminating malodors. Currently, there are approximately four broad approaches known in the art to reduce malodors: 1) inhibition, 2) adsorption or absorption, 3) neutralization, and 4) masking. The present invention, however, has discovered the use of metals to capture and neutralize offensive gases from odorous compounds for increased effectiveness.

The addition of a metal ion adsorbed onto the algal biomass fiber, as in this invention, provides an active site for capturing and neutralizing gases and odorous compounds. The metal ion creates an active site that may bind with at least one gaseous compound and/or odorous compound thereby removing the compound from the surrounding environment. More than one type of metal ion can be adsorbed onto the algal biomass fiber. This has an advantage in that certain metal ions may be better at removing specific gases and/or odorous compounds than other metal ions. In one embodiment of this invention more than one type of metal ion are adsorbed onto an algal biomass fiber for more effectively removing more than one type of gaseous compound or odorous compound from a medium. For example, odors that may be removed by the present invention include ammonia, trimethylamine, triethylamine, dimethyl disulfide, isocaleric acid, pyridine, ethyl mercaptan, and combinations thereof. In one embodiment of this invention more than one type of metal ion are adsorbed onto an algal biomass fiber for removing at least one gaseous compound and at least one odorous compound from a medium.

Removal of odor compounds in the gaseous state by metal-laden algal biomass fiber can be assessed by calculating the amount of headspace odor removed by a sample. The peak area for the particular odor obtained from the vial with sample is compared to the peak area from a standard vial (odor only, no sample). The standard vial with only the aliquot of odor is tested to define 0% odor adsorption. The results can be presented as "% odor removed" or as "amount of odor removed per mass of sample" (e.g., mg odor removed per gram of sample).

*Cladophora* laden with copper or silver sample weight for each headspace GC experiment was about 14 mg. The weighed sample is transferred to individual headspace GC sample vial. The neat gaseous compound sample (ammonia or dimethyl disulfide) at 4 µL is injected to the inner wall of the headspace GC sample vial (20 mL). The vial is immediately sealed (PTFE/silicone/PTFE septa) and transferred to the headspace GC oven at body temperature (37 °C). After ten minutes, a syringe is inserted through the septum into the vial to remove 1cc air sample in the headspace (inside of the vial) that is then injected into the GC for measurement. This short exposure time of ten minutes to the odor is kept constant for all samples.

Headspace GC data can be collected on a Hewlett-Packard (Agilent) 5890 series II gas chromatograph equipped with a Hewlett-Packard 7694 headspace sampler. Helium can be used as the carrier gas. A DB-624 capillary column (30 m length, 0.25 mm i.d.) and flame ionization detector (FID) were used for detection within the present invention. The sample replicates are n=7 for ammonia and n=2 for dimethyl disulfide.

### EXAMPLES

The following examples further describe and demonstrate embodiments within the scope of the present invention. The examples are given solely for the purpose of illustration.

### Example 1

*Cladophora* sample was rinsed three times in tap water to remove dirt, debris and sandy materials associated with the algal material. Five grams of air-dried algal sample after cleaning was weighed and placed in Osterizer blender. Tap water of 500 mL water was added and the content was shredded for three minutes. The algal sample had about 2 to about 5 mm length after shredding. The shredded *Cladophora* sample was collected and soaked in 0.5 M HCl solution for 30 minutes. The algae sample was then washed three times using deionized water before it was soaked in 0.5 M NaOH solution for 30 minutes. This acid and base washing is to free functional groups that are likely complexed with substances such as trace metals during *Cladophora* growth in natural water. The algal sample was lastly washed again three times using deionized water.

The algal sample through acid and base cleaning was then immersed in 500 mL of 200 ppm copper sulfate solution (Sigma-Aldrich, St. Louis, MO) for two hours to ensure complete copper adsorption onto algal biomass. Normally algal metal uptake was about 30 minutes to completion. The algal sample was then rinsed three times with deionized water prior to air drying.

The above procedures were repeated for a preparation of *Cladophora* algae laden with silver using 500 mL of 200 ppm silver nitrate solution (Sigma-Aldrich, St. Louis, MO). The metal loading per gram of fiber is calculated to be 20 mg. The prepared algae samples were subjected to odor removal testing or zone of inhibition (ZOI) test, respectively. In odor removal evaluation, ammonia and dimethyl disulfide were used to represent odorous compounds. In antimicrobial assessment, *Staphylococcus aureus* (ATCC 25660) as Gram positive bacteria and *Escherichia coli* as Gram negative bacteria (ATCC 25922) were selected for testing.

A portion of the algal sample through acid and base cleaning steps was also saved as a control when odor removal or antimicrobial activity was evaluated.

### Example 2

*Cladophora* algal fiber laden with copper from Example 1 was tested for ammonia absorption by GC headspace method. The amount of ammonia adsorbed by *Cladophora* algal fiber laden with copper was 60 mg/g. As a control, *Cladophora* algal fiber without copper from Example 1 was also tested for ammonia absorption by GC headspace method, which didn't show ammonia removal. In comparison, an activated carbon sample (type OL20x50 from Calgon Carbon Corporation, Pittsburgh, PA) was tested by GC headspace method. The amount of ammonia absorbed by activated carbon was 30 mg/g. Therefore, *Cladophora* laden with copper can capture 100% greater amount of ammonia than absorbed by activated carbon.

In the case of zeolites for the performance comparison, both Zeolite CBV 400 and 901 (Zeolyst International, Conshohocken, PA) adsorbed only 11 and 20 mg of ammonia per gram of zeolite, which is less than 33% of ammonia removal capacity provided by *Cladophora* algal fiber laden with copper. For still another comparison, four activated carbon fiber samples with BET nominal surface area of 1000 m²/g, 1500 m²/g, 2000 m²/g, and 2500 m²/g were tested, respectively, to determine ammonia absorption by GC headspace method. The amount of ammonia absorbed by four activated carbon fiber samples was 16 mg/g, 20 mg/g, 21 mg/g, and 18 mg/g, respectively. None of them were able to match or out-perform the *Cladophora* algal fiber laden with copper.

Table 1 shows the odor absorption of the *Cladophora* laden with copper sample as compared to other traditional odor removal substances or cellulose laden with copper. As shown, the *Cladophora* laden with copper show significant improvement for odor absorption.

**Table 1:**

| A Comparison of Odor Removal by Different Agents | | |
|---|---|---|
| Sample Description | Odor Absorption (Ammonia) mg/g | Odor Absorption (dimethyl sulfide) mg/g |
| *Cladophora* laden with copper (20 mg/g Cu) | 60 | 71 |
| COMPARATIVES | | |
| Comparative - Activated Carbon OL 20x50 | 30 | NA |
| Comparative - Zeolite CBV 400 | 11 | NA |
| Comparative - Zeolite CBV 901 | 20 | NA |
| Comparative - Activated Carbon Fibers (1000) | 16 | NA |
| Comparative - Activated Carbon Fibers (1500) | 20 | NA |
| Comparative - Activated Carbon Fibers (2000) | 21 | NA |
| Comparative - Activated Carbon Fibers (2500) | 18 | NA |
| Comparative - *Cladophora* (acid and base cleaned), (0 mg/g Cu) | 0 | 0 |
| Comparative - Eucalyptus (wood pulp) laden with copper (20 mg/g Cu) | 11 | 55 |

### Example 3

*Cladophora* algal fiber laden with copper from Example 1 was also tested for dimethyl disulfide absorption by GC headspace method. The amount of dimethyl disulfide adsorbed by *Cladophora* algal fiber laden with copper was 71 mg/g. *Cladophora* algal fiber without copper from Example 1 was also tested for dimethyl disulfide removal by GC headspace method, which didn't show dimethyl disulfide removal. These results are also incorporated into Table 1 above.

### Example 4

The prepared *Cladophora* samples laden with silver or copper and *Cladophora* sample without either metal from Example 1 were subjected to zone of inhibition (ZOI) test. *Staphylococcus aureus* (ATCC 25660) as Gram positive bacteria and *Escherichia coli* (ATCC 25922) as Gram negative bacteria were selected for testing. Table 2 summarizes the ZOI test results. In comparison, silver ion is effective to kill Gram positive bacteria such as *Staphylococcus aureus* (ATCC 25660) and copper ion is equally effective to kill either *Staphylococcus aureus* (ATCC 25660) or *Escherichia coli* (ATCC 25922).

**Table 2**

| Zone of Inhibition Testing Data | | |
|---|---|---|
| Algal Sample | *Staphylococcus aureus* (ATCC 25660) | *Escherichia coli* (ATCC 25922) |
| *Cladophora* without copper or silver ion | 0.0 cm | 0.0 cm |
| *Cladophora* laden with silver ion | 3.7 cm | 0.8 cm |
| *Cladophora* laden with copper ion | 1.8 cm | 1.5 cm |

Fig. 1 shows a clear zone in a diameter about 3.7 cm created during the ZOI testing. Other samples are similar with a different degree of bacterial inhibition.

## Claims

1. A personal care product comprising an algal biomass fiber material derived from *Cladophora*, *Chaetomorpha*, *Rhizoclonium*, or combinations thereof, and comprising at least one metal ion selected from the group consisting of copper, silver and combinations thereof, wherein said personal care product provides antimicrobial activity, odor removal, gas removal or a combination thereof.

2. The personal care product of claim 1 wherein the adsorption capacity ranges from 1 mg to 60 mg of metal per gram of algae biomass.

3. The personal care product of claim 1 wherein the metal ions are loaded onto the algal biomass fiber in an aqueous solution containing a metal ion in an amount of from 200 mg/L to 1000 mg/L.

4. The personal care product of claim 1 wherein said odor removal comprises removing odors selected from ammonia, trimethylamine, triethylamine, dimethyl disulfide, isocaleric acid, pyridine, ethyl mercaptan, and combinations thereof.

5. The personal care product of claim 1 wherein said antimicrobial activity comprises eliminating Gram positive bacteria *Staphylococcus aureus* (ATCC 25660)and Gram negative bacteria *Escherichia coli* (ATCC 25922), and combinations thereof.

6. The personal care product of claim 1 wherein said metal ions are soluble in an aqueous medium and available from a corresponding inorganic compound selected from sulfates of the metal ions, nitrates of the metal ions and combinations thereof.

7. The personal care product of claim 1 wherein the algal biomass fiber has a fiber length of from 2 mm to 5 mm.

8. The personal care product of claim 1, wherein said personal care product is selected from tissue, towel, napkin, disinfecting wipes, sanitizing wipes, baby care products, health and wound care products, incontinence articles and feminine care products.

## Patentansprüche

1. Körperpflegeprodukt, umfassend ein Algenbiomasse-Fasermaterial, das aus *Cladophora, Chaetomorpha, Rhizoclonium* oder Kombinationen davon gewonnen wird, und umfassend mindestens ein Metallion, das aus der Gruppe ausgewählt wird, die aus Kupfer, Silber und Kombinationen davon besteht, wobei das Körperpflegeprodukt antimikrobielle Aktivität, Geruchsentfernung, Gasentfernung oder eine Kombination davon bereitstellt.

2. Körperpflegeprodukt nach Anspruch 1, wobei die Adsorptionskapazität von 1 mg bis 60 mg Metall pro Gramm Algenbiomasse reicht.

3. Körperpflegeprodukt nach Anspruch 1, wobei die Metallionen auf der Algenbiomassefaser in einer wässrigen Lösung geladen sind, die ein Metallion in einer Menge von 200 mg/l bis 1000 mg/l enthält.

4. Körperpflegeprodukt nach Anspruch 1, wobei die Geruchsentfernung das Entfernen von Gerüchen umfasst, die aus Ammoniak, Trimethylamin, Triethylamin, Dimethyldisulfid, Isoveleriansäure, Pyridin, Ethylmerkaptan und Kombinationen davon ausgewählt werden.

5. Körperpflegeprodukt nach Anspruch 1, wobei die antimikrobielle Aktivität das Beseitigen gram-positiver Bakterien *Staphylococcus aureus* (ATCC 25660) und gramnegativer Bakterien *Escherichia coli* (ATCC 25922) und Kombinationen davon umfasst.

6. Körperpflegeprodukt nach Anspruch 1, wobei die Metallionen in einem wässrigen Medium löslich und aus einer entsprechenden anorganischen Verbindung verfügbar sind, die aus Sulfaten der Metallionen, Nitraten der Metallionen und Kombinationen davon ausgewählt wird.

7. Körperpflegeprodukt nach Anspruch 1, wobei die Algenbiomassefaser eine Faserlänge von 2 mm bis 5 mm hat.

8. Körperpflegeprodukt nach Anspruch 1, wobei das Körperpflegeprodukt aus Taschentuch, Handtuch, Serviette, Desinfektionstüchern, Hygienetüchern, Babypflegeprodukten, Gesundheits- und Wundpflegeprodukten, Inkontinenzartikeln und Hygieneprodukten für Frauen ausgewählt wird.

## Revendications

1. Produit de soins personnels comprenant un matériau de fibres de biomasse algale dérivée de *Cladophora,* de *Chaetomorpha,* de *Rhizoclonium* ou leurs combinaisons, et comprenant au moins un ion métallique choisi parmi le groupe constitué de cuivre, d'argent et leurs combinaisons, dans lequel ledit produit de soins personnels fournit l'activité antimicrobienne, l'élimination des odeurs, l'élimination de gaz ou une combinaison de ceux-ci.

2. Produit de soins personnels selon la revendication 1, dans lequel la capacité d'adsorption va de 1 mg à 60 mg de métal par gramme de biomasse algale.

3. Produit de soins personnels selon la revendication 1, dans lequel les ions métalliques sont chargés sur la fibre de biomasse algale dans une solution aqueuse contenant un ion métallique en une quantité allant de 200 mg/L à 1000 mg/L.

4. Produit de soins personnels selon la revendication 1, dans lequel ladite élimination des odeurs comprend l'élimination des odeurs choisies parmi l'ammoniac, la triméthylamine, la triéthylamine, le disulfure de diméthyle, l'acide isovalérique, la pyridine, le mercaptan éthylique et leurs combinaisons.

5. Produit de soins personnels selon la revendication 1, dans lequel ladite activité antimicrobienne comprend l'élimination de bactéries Gram positif *Staphylococcus aureus* (ATCC 25660) et de bactéries Gram négatif *Escherichia coli* (ATCC 25922) et leurs combinaisons.

6. Produit de soins personnels selon la revendication 1, dans lequel lesdits ions métalliques sont solubles dans un milieu aqueux et disponibles à partir d'un composé inorganique correspondant choisi parmi des sulfates des ions métalliques, des nitrates des ions métalliques et leurs combinaisons.

7. Produit de soins personnels selon la revendication 1, dans lequel la fibre de biomasse algale a une longueur de fibres allant de 2 mm à 5 mm.

8. Produit de soins personnels selon la revendication 1, dans lequel ledit produit de soins personnels est choisi parmi un mouchoir, une serviette, une serviette de table, des lingettes désinfectantes, des lingettes antiseptiques, des produits de soins pour bébés, des produits de santés et de soins de plaies, des articles pour incontinence et des produits d'hygiène féminine.
